(19) Europäisches Patentamt

European Patent Office

Office européen des brevets

(11) **EP 1 251 343 B1**

(12) **EUROPEAN PATENT SPECIFICATION**

(45) Date of publication and mention
of the grant of the patent:
**08.03.2006 Bulletin 2006/10**

(51) Int Cl.:
*G01N 3/42* *(2006.01)*    *G01N 3/48* *(2006.01)*
*G01L 5/00* *(2006.01)*    *G01M 7/08* *(2006.01)*

(21) Application number: **01109749.0**

(22) Date of filing: **20.04.2001**

(54) **Method and device for mechanical stresses measurement**

Verfahren und Vorrichtung zur Messung von mechanischen Spannungen

Procédé et appareil pour mesurer des contraintes mécaniques

(84) Designated Contracting States:
**AT BE CH CY DE DK ES FI FR GB GR IE IT LI LU
MC NL PT SE TR**

(43) Date of publication of application:
**23.10.2002 Bulletin 2002/43**

(73) Proprietors:
• **Makarov, Vladimir
  664009 Irkutsk City (RU)**
• **Demine, Constantin
  115487 Moscow (RU)**

(72) Inventors:
• **Makarov, Vladimir
  664009 Irkutsk City (RU)**
• **Demine, Constantin
  115487 Moscow (RU)**

(74) Representative: **Kügele, Bernhard et al
Novagraaf SA
25, Avenue du Pailly
1220 Les Avanchets - Geneva (CH)**

(56) References cited:
**DE-A- 3 930 483        US-A- 5 841 019
US-A- 6 155 104**

**Description**

The Invention is related to the area of measurement of mechanical stresses in surface layers of metallic articles and can be used to effect nondestructive control over those parts/compounds of machines/ structures which are exposed to mechanical stress.

One known method to measure mechanical stresses is that orifices are drilled out in the material of an article concerned, so as to measure deformations from the drilling, based on which measurements mechanical stress is determined (Japanese patent JP57175233 of October 28, 1982, within G01L5/00 class).

The deficiency of this method is that it necessarily breaks the article's integrity, for which reason its use domain is not very broad.

There is also another generally known method to measure mechanical stresses, which stands close, by its technical essence, to that afore-stated and is conventionally assumed to be a prototype thereof; its core is that a large imprint is created by an indenter on an article's surface; after measuring the diameter of the imprint thus created, it is compared with that of the imprint on the stressed surface of an analog article (an etalon or standard), thus determining mechanical, residual stresses (Ya. D. Vishniakov, V. D. Piskariov, Control of Residual Stresses in Metals and Alloys. Moscow:
"Metallurgy", 1989, PP 212 - 215). This method has essentially important demerits: measurement and comparison of the imprints on the article and on the standard cannot provide sufficiently precise determination of the amount of the stress under the measurement. When comparison of such imprints is concerned, it often appears that no significant difference can be monitored there between, while simultaneous measurements made, for example, by X-ray method would, on the contrary, show that the article is under stress. Thus, owing to this method coming short of the necessary degree of either accuracy or adequacy, thus affecting the quality of measurements, it cannot obtain an acceptable level of preciseness.

The document US 6,155,104 describes a method and apparatus for determining preexisting stresses based on indentation or other mechanical probing of a material. The disclosed technique makes it possible to determine preexisting stresses in a sample of material and then to calculate the stresses based on changes in the parameters of this process. An indentor is impressed into the sample under measurement with the aid of a press tool.

The document US 5,841,019 describes a method for nondestructive measuring compressive and tensile strength of concrete in the structure. By measuring electrical resistance in the contact zone of an indentor as well as electrical resistance of the material itself during the moment of impact and depending on the size and sign of stresses in the impacting surfaces. Compression and extension stresses in the material are then determined by analyzing the nature of time change and the size of a time segment in a plotted curve showing electrical signal saturation as well as accompanying acoustic signals.

The objective of this invention is to increase the quality of mechanical stress measurements. The said objective is accomplished by a method and a device as defined in claims 1 to 3. The method comprises the sequence of the following actions:

imprints are provided through dynamic collision of a spherical indenter; then, only the diameter of the imprint borne by the standard is measured; rates at which the spherical indenter has collided with, and bounced from, the article's and the standard's surfaces; and, finally, mechanical stresses shall be determined from the following formula:

$$\sigma = C\,\bar{g}\,\frac{m\,v^2}{\pi\,d^3}\,(k_1^2 - k_2^2) \qquad (\text{N/mm}^2)$$

where:

σ - the value sought for;

C - non-dimensional reduced coefficient dependent upon properties of the respective materials the indenter, standard and article are made of, and $5 \le C \le 20$;

$\bar{g}$ - non-dimensional coefficient numerically equaling the gravity acceleration;

m - mass of the spherical indenter;

v - rate of the collision;

d - diameter of the standard-borne imprint;

$k_1$ - coefficient to be determined from the equation

$$k_1 = v_1 / v,$$

where: v is rate of the collision: $v_1$ is rate at which the spherical indenter has bounced from the standard; $k_2$ - coefficient to be determined from the equation

$$k_2 = v_2 / v,$$

where v - rate of the collision; $v_2$ - rate at which the spherical indenter has bounced from the article; $\pi$ - number "$\pi$" =3.1412 ....

Where necessary, the article's surface cleansed from mechanical stresses can serve as the standard.

There is a generally known method to research properties of the material an article is made of; this includes: the loading of the standard and of the analyzed article (the RU Patent No. 2140075 of July 09, 1998, within G01N 29/14, 19/04, 3/00 class, the RF Invention Bulletin No. 29 dated October 20, 1999), through the incorporation of the indenter; and registration, the loading-coincident, of signals of the acoustic emission, with the subsequent determination of the material's properties. However, the said method has been specifically developed to analyze and discern the material's properties and, as such, it cannot be used to determine mechanical stresses suffered by the material an article is made of, since such mechanical stresses can in no way be deemed to be a material's inherent property or properties, such as hardness, but, rather, represent the result or consequence of an outer (for example, stretching) or, sometimes, internal (phase transformations in metals, for example) effect.

Besides, this recognized method carries out static loading of the standard and the tested article by indentation of an indenter, rather than dynamic loading as in the proposed method.

There also is a generally known method of measurement of residual mechanical stresses and there is a device for putting this method into practice (refer to patent No. JP 5079928 as of 30.03.1993 under IPC Cl. G01L 1/00) including application of strain meters stuck pair-wise on the tested surface and a device for indentation of the indenter into the central area between the stuck strain meters. The indentation force and variations in the readings of the strain meters define the residual stresses in the surface and the hardness of the material, which makes it possible to make an opinion regarding the material strength, for example, a nuclear reactor equipment. However, the said method has its shortcomings, namely: it is necessary to stick strain meters in contrast to the proposed method, it is also necessary to set a device with high precision (centering) between the strain meters for indentation of the indenter.

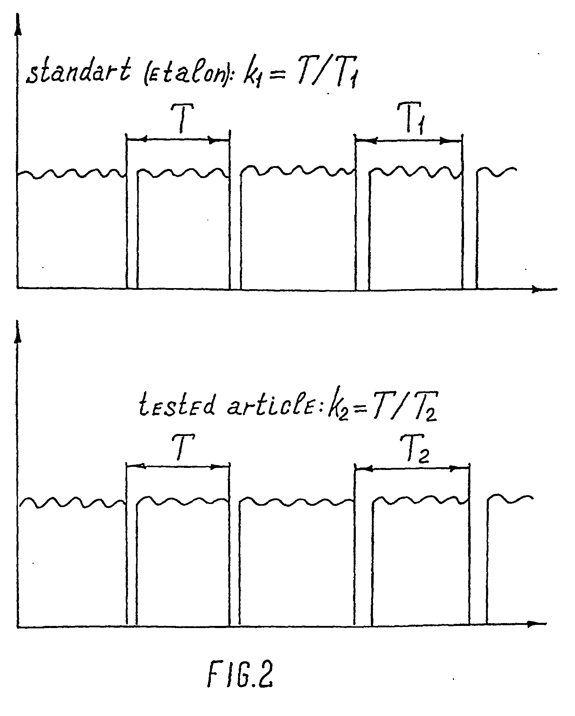

There is also a familiar stress measurement method realized in a device for metering stresses (refer to patent USA No. 5463896 of 7.11.1995) in gun steel specimens, with a known relationship between hardness, contact pressure and elastic stresses. The specimen is represented as a cylindrical collar (Fig. 2, patent USA No. 5463896 of 7.11.1995) with the known outer and inner diameters.

When measuring the hardness, for example by the generally known method of Meyer, along the radius from the inner diameter to the outer diameter, these hardness measurements are transformed into elastic stress data on the basis of the known relationship. The shortcomings are as follows: restricted by a specific type of a specimen, in contrast to the proposed method, uses statistical indentation by the known method with measurements of hardness.

The essence of the invention is taking into account the interrelation between the spherical indenter dynamically indented into the standard's material and into the tested article. And also that part of the tested article, which part has not been for sure subject to mechanical stresses to be determined, may be taken as a standard. Variations in the rate of bounce of the spherical indenter from the surface of the material are due to two causes: the hardness of this surface and presence of mechanical stresses in this surface (compression, tension, torque). If the hardness of the standard's material and the hardness of the tested article are equal, then variations in the rate of bounce of the spherical indenter will only depend upon the presence of mechanical stresses and consequently the rate of bounce of the spherical indenter is a function of the value and the sign of mechanical stresses in the surface of the tested article. And vise versa, when the above-mentioned condition is satisfied, the mechanical stress values may be defined as a function dependent upon the variations in the coefficient of bounce, which coefficient is equal in digital form to a relationship of the rate of bounce of the spherical indenter to the rate of collision of the indenter. It is this definition of mechanical stresses which is realized in the proposed invention, where the unknown quantity of mechanical stresses is a function dependent only upon relationship between the coefficients of bounce from the standard and from the tested article, since all other conditions are equal and one and the same spherical indenter is used in collision both with the standard and the tested article. Thus just the determination of the exact functional dependence of mechanical stresses upon the variations in the coefficient of bounce increases the precision and adequacy of determination of such stresses and consequently we reach the aim of the invention, that is to improve the quality of measurement of mechanical stresses in the surface of a tested article.

The advantages of the method proposed lie in the possibility of the nondestructive test of the stress condition of essential load-bearing loaded metal constructions and articles in contrast to other methods, for example the X-ray method, which are not efficient, are destructive methods and have low precision of mechanical stresses determination.

The present invention will be described in detail hereafter thereby referring to the accompanying drawings, given by way of example only, and in which:

Figure 1 shows a schematic representation of a device for carrying out the method according to the present invention, and

Figure 2 shows the signals measured on the standard (etalon) and on a tested article.

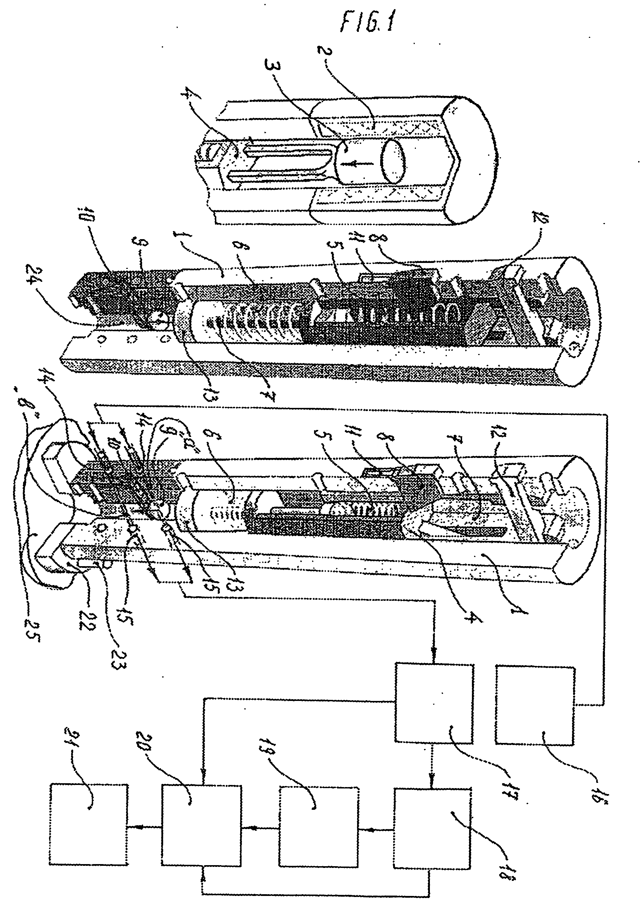

The proposed method is reduced to practice by means of a device (Fig 1) consisting of the following: case 1, electromagnet 2, rod 3, carriage 4, starting spring 5, return spring 6, percussive rod 7, lock 8, spherical indenter 9, r-shaped laminated spring 10, lock spring 11, triggering clamp 12, thrust collar 13, light-emitting diode 14, emission receiver 15, pulse generator 16, logic device 17, calculator 18, computing unit 19, display 20, printing device 21, support 22, interlock 23, channel 24 and tested surface 25.

The device operates as follows: on turning on electromagnet 2, rod 3, by advancing, comes up against carriage 4 and by means of the carriage compresses starting spring 5 and return spring 6, with carriage 4 edge being locked by locks 8 which hold carriage 4 in the extreme position with springs 5 and 6 compressed. On pressing triggering clamp 12, percussive rod 7, actuated by starting spring 5, through the orifice in thrust collar 13 forces out spherical indenter into channel 24 of case 1. Spherical indenter was up to this moment held by r-shaped spring 10 which closed the gap in the channel and prevented spontaneous movement of the spherical indenter. But actuated by percussive pressure by rod 7, spherical indenter 9 overcomes the resistance of spring 10 and falls along channel 24 crossing in this movement beams "a" and "b" from light-emitting diodes 14 which beams are directed to emission receivers 15. Spherical indenter 9 bounces from tested surface 25 and again crosses beams "b" and "a" in opposite direction. Moving under its own momentum, spherical indenter 9 overcomes spring 10 resistance the value of which in the opposite direction is less than the value in the direction of the fall of spherical indenter 9 to tested surface 25, and spring 10, on letting the spherical indenter pass, bends back and returns to initial position without letting the indenter move spontaneously. Percussive rod 7, after forcing out spherical indenter 9, in its movement under its own momentum moves apart locks 8 by conical stops and releases carriage 4 and return spring 6. Actuated by the spring, carriage 4 moves in the opposite direction together with percussive rod 7. The device returns to initial position and can be applied again on turning on electromagnet 2. Electromagnet 2 has interlock 23 preventing it from turning on unless support 22 is pressed to the tested surface so that the axis of indenter 9's channel of fall was at an angle of 90° to tested surface 25.

Pulse generator 16 modulates emission by light-emitting diodes 14, and when spherical indenter 9 crosses beams "a" and "b" in straight and opposite directions, emission "valleys" pulses develop with the distance between them (Fig.2) being in inverse proportion to the speed of motion of spherical indenter 9. Proceeding from this, calculator 18 calculates the speed of spherical indenter 9 and the value of bounce coefficients $k_1$ and $k_2$ and shows these values on display 20. Logical device 17 determines the order of crossing the beams: "a" - "b" - "b" - "a" and in case of deviation from this order, annuls the result and also shows corresponding information on display 20. If there are no any deviations, calculator 18 gives source data to computing unit 19, the result of which is given to display 20 in the form of the value of unknown quantity σ. If necessary, computing unit 19 plots also σ distribution curves and shows them on display 20. In order to register the result received, it can be printed out on printing device 21. Computing unit 19 is usually created as a program for a personal computer (notebook).

We are familiar with the methods and devices (German patent DE 3930483 as of 14.03.1991 under G01 No. 3/02 cl.) for measuring the dynamical hardness of an article's material (an electronic hardness gage) which methods and devices are made on the basis of measurement of the rate of collision and the rate of bounce of the body to be indented from the tested article. The relationship between these rates determines the value of the article's material hardness. However the known method and device have such an advantage, as is stated in the description of patent DE 3930483, that the application eliminates the effect of tensile forces in the surface of the tested article on the results of hardness measurements, and exactly this, namely the measurement of this effect, is the basis of action of the proposed invention and an essential difference of the proposed device. Thus it is impossible to apply the known device (the electronic hardness gage) for realization of the proposed method since it is not sensitive to the presence of mechanical stresses in the tested article.

It has been also known that the principle of measurement of the moving body speed by crossing two beams from emission sources is used (refer to patent USA No. 4329047 as of 05.11.82 under class G01 P3/36). However in contrast to the known device, in the proposed device one and the same moving body (the spherical indenter) crosses one and the same beams twice, in straight (in collision) and in opposite (in bounce) directions. Thus the set of actions done in the proposed device on the object of invention, which set is a criterion of the novelty evaluation, is other than in the known device (patent USA No. 4329047). It is impossible to do such a set of actions in the recognized decision.

The field of application of the proposed method and the device for putting this method into practice is determined by the necessity of nondestructive test of the stress condition of the following articles and constructions:

- airplanes and parts and units of the airplanes;
- high-pressure equipment;
- pipelines;
- bridge constructions;
- surface and submarine vessels, parts and units of same;
- laboratory tests of stress condition of various metals and alloys.

Having described a preferred embodiment of this invention, it will now be apparent to one of skill in the art that other embodiments incorporating its concept may be used. It is felt, therefore, that this invention should not be limited to the disclosed embodiment, but rather should be limited only by the scope of the appended claims.

## Claims

1. Mechanical stress measuring method, including making indents from the spherical indenter on the surface of the tested article and of the standard, measurement of indent diameters, wherein the indents are made by dynamic collision of the spherical indenter, the indent diameter is measured only on the standard, the rate of collision and the rate of bounce of the spherical indenter from the surface of the article and of the standard are measured, and mechanical stresses are determined on the basis of relationship,

$$\sigma = C \, \overline{g} \, \frac{m \, v^2}{\pi \, d^3} \, (k_1{}^2 - k_2{}^2) \qquad (N/mm^2)$$

where:

$\sigma$ - the value sought for;

C - non-dimensional reduced coefficient dependent upon properties of the respective materials the indenter, standard and article are made of, and $5 \leq C \leq 20$;

$\overline{g}$ - non-dimensional coefficient numerically equaling the gravity acceleration;

m - mass of the spherical indenter;

v - rate of the collision;

d - diameter of the standard-borne imprint;

$k_1$ - coefficient to be determined from the equation

$$k_1 = v_1 \, / \, v,$$

where: v is rate of the collision; $v_1$ is rate at which the spherical indenter has bounced from the standard;

$k_2$ - coefficient to be determined from the equation

$$k_2 = v_2 \, / \, v,$$

where v - rate of the collision; $v_2$ - rate at which the spherical indenter has bounced from the article;

$\pi$ - number "$\pi$" =3.1412 ....

2. Method according to claim 1, wherein the tested article's surface free of mechanical stresses is used as a standard.

3. Device for carrying out the method according to claim 1 or 2, which device comprises:

- a case (1);

- an electromagnet (2) for advancing a rod (3) against a carriage (4), the carriage being arranged for compressing a starting spring (5) and a return spring (6);

- a lock (8) connected to a lock spring (11) for holding said carriage (4) in the extreme position with starting spring (5) and return spring (6) compressed;

- a triggering clamp (12) for actuating a percussive rod (7) via starting spring (5) so as to force out in use a spherical indenter (9) through the orifice of a thrust collar (13) into a channel (24) of said case (1);

- a r-shaped laminated spring (10) for holding spherical indenter (9) in its rest position and for closing the gap in the channel (24) of the case (1) thus preventing spontaneous movement of the spherical indenter (9), wherein the percussive rod (7), when actuated in use, is arranged to make the spherical indenter (9) to overcome the resistance of the Γ-shaped laminated spring (10) and to fall along said channel (24) of the case (1);

- light emitting diodes (14) for directing beams of light through said channel (24) of case (1) onto emission receivers (15) and being so arranged that in use the spherical indenter (9) crosses said beams of light on its way through said channel (24);

- a pulse generator (16) for modulating emission by light emitting diodes (14);

- a logic device (17) for determining the order in which, in use, the spherical indenter (9) crosses said beams of light on its way through said channel (24);

- a calculator (18) for calculating the speed of the spherical indenter (9) and the value of the bounce coefficients $k_1$ and $k_2$;

- a computing unit (19) for computing the unknown quantity σ for the mechanical stresses;

- a display (20) for displaying the information determined by the logic device (17) and by the computing unit (19);

- a printing device (21);

- a support (22) for supporting said case (1) and being arranged so that, in use, the support (22) is pressed to the test surface (25) so that the axis of the channel (24) of the case (1) is aligned at an angle of 90° with respect to the test surface (25);

- an interlock (23) for preventing in use electromagnet (2) from turning on unless support (22) is pressed to a test surface (25).

**Patentansprüche**

1.  Verfahren zum Messen der mechanischen Beanspruchung einschließlich des Herstellens von Einkerbungen von dem kugelförmigen Eindringkörper auf der Oberfläche des getesteten Gegenstandes sowie des Bezugsnormals, zum Messen von Einkerbungsdurchmessern, wobei die Einkerbungen durch dynamisches Aufprallen des kugelförmigen Eindringkörpers erzeugt werden, der Einkerbungsdurchmesser nur am Bezugsnormal gemessen wird, die Aufprallgeschwindigkeit und die Abprallgeschwindigkeit des kugelförmigen Eindringkörpers von der Oberfläche des Gegenstandes und des Bezugsnormals gemessen werden und die mechanischen Beanspruchungen auf Grundlage der Beziehung

$$\sigma = C\, \overline{g}\, \frac{m\, \mathrm{v}^2}{\pi\, \mathrm{d}^3}\, (k_1^2 - k_2^2) \qquad (\mathrm{N/\, mm^2})$$

bestimmt werden, wobei ist:

σ - der gesuchte Wert;

C - dimensionsloser reduzierter Koeffizient, der von den Eigenschaften der jeweiligen Materialien abhängt, aus denen Eindringkörper, Bezugsnormal und Gegenstand bestehen, und $5 \le C \le 20$;

$\overline{g}$ - dimensionsloser Koeffizient, der zahlenmäßig gleich der Erdbeschleunigung ist;

m - Masse des kugelförmigen Eindringkörpers;

v - Aufprallgeschwindigkeit;

d - Durchmesser des am Bezugsnormal erzeugten Abdrucks;

$k_1$ - Koeffizient, der aus der Gleichung $k_1 = v_1 / v$ zu bestimmen ist;

wobei v die Aufprallgeschwindigkeit ist; $v_1$ ist die Geschwindigkeit, mit welcher der kugelförmige Eindringkörper vom Bezugsnormal abgeprallt ist;

$k_2$ - Koeffizient, der aus der Gleichung $k_2 = v_2 / v$ zu bestimmen ist;

wobei v die Aufprallgeschwindigkeit ist; $v_2$ - Geschwindigkeit, mit welcher der kugelförmige Eindringkörper vom Gegenstand abgeprallt ist;
π - Zahl "π" = 3.1412 ... .

**2.** Verfahren nach Anspruch 1, wobei die Oberfläche des getesteten Gegenstandes, die frei von mechanischen Spannungen ist, als ein Bezugsnormal verwendet wird.

**3.** Vorrichtung zum Ausführen des Verfahrens nach Anspruch 1 oder 2,
wobei die Vorrichtung umfasst:

- ein Gehäuse (1);
- einen Elektromagneten (2) zum Beschleunigen eines Stabes (3) gegen einen Schlitten (4), wobei der Schlitten für das Zusammendrücken einer Anschubfeder (5) und einer Rückholfeder (6) eingerichtet ist;
- eine Arretierung (8), die mit einer Arretierungsfeder (11) zum Festhalten des Schlittens (4) in der Endlage verbunden ist, in der die Anschubfeder (5) und die Rückholfeder (6) zusammengedrückt sind;
- ein Auslösebügel (12) zum Betätigen eines Schlagbolzens (7) über die Anschubfeder (5), so dass beim Einsatz ein kugelförmiger Eindringkörper (9) durch die Öffnung eines Druckringes (13) in einen Kanal (24) des Gehäuses (1) hinein gedrückt wird;
- eine Γ-förmige Blattfeder (10) zum Halten des kugelförmigen Eindringkörpers (9) in seiner Ruhelage und zum Schließen des Spaltes im Kanal (24) des Gehäuses (1), so dass eine spontane Bewegung des kugelförmigen Einschlagkörpers (9) verhindert wird, wobei der Schlagbolzen (7), wenn er beim Einsatz betätigt wird, so eingerichtet ist, dass der kugelförmige Eindringkörper (9) den Widerstand der r-förmigen Blattfeder (10) überwindet und entlang des Kanals (24) des Gehäuses (1) fällt;
- Licht emittierende Dioden (14), um Lichtstrahlen durch den Kanal (24) des Gehäuses (1) hindurch auf Strahlungsempfänger (15) hin zu lenken, derart angeordnet, dass der kugelförmige Eindringkörper (9) beim Einsatz auf seinem Weg durch den Kanal (24) die Lichtstrahlen kreuzt;
- einen Impulsgenerator (16) zum Modulieren der Emission durch die Licht emittierenden Dioden (14);
- eine Logikbaugruppe (17) zum Bestimmen der Reihenfolge, in welcher beim Einsatz der kugelförmige Eindringkörper (9) auf seinem Weg durch den Kanal (24) die Lichtstrahlen kreuzt;
- einen Rechner (18) zum Berechnen der Geschwindigkeit des kugelförmigen Eindringkörpers (9) und des Wertes der Prallkoeffizienten $k_1$ und $k_2$;
- eine Recheneinheit (19) zum Berechnen der unbekannten Größe σ für die mechanischen Spannungen;
- eine Anzeigevorrichtung (20) zum Anzeigen der Informationen, welche durch die Logikbaugruppe (17) und die Recheneinheit (19) bestimmt wurden;
- eine Druckvorrichtung (21);
- eine Halterung (22) zum Abstützen des Gehäuses (1) und so angeordnet, dass die Halterung (22) beim Einsatz derart an die Testoberfläche (25) gedrückt wird, dass die Achse des Kanals (24) des Gehäuses (1) unter einem Winkel von 90° mit Bezug auf die Testoberfläche (25) ausgerichtet ist;
- eine Verriegelung (23), um beim Einsatz zu verhindern, dass der Elektromagnet (2) eingeschaltet wird, außer wenn die Halterung (22) gegen eine Testoberfläche (25) gedrückt wird.

**Revendications**

**1.** Procédé de mesure de contrainte mécanique, comprenant la réalisation d'empreintes à partir du pénétrateur sphérique sur la surface de l'article testé et de l'étalon, la mesure des diamètres d'empreintes, où des empreintes sont effectuées par collision dynamique du pénétrateur sphérique, le diamètre de l'empreinte n'est mesuré que sur l'étalon, la vitesse de collision et la vitesse de rebond du pénétrateur sphérique depuis la surface de l'article et de l'étalon sont mesurées, et les contraintes mécaniques sont déterminées sur la base de la relation,

$$\sigma = C\overline{g}\frac{mv^2}{\pi d^3}\left(k_1^{\ 2} - k_2^{\ 2}\right) \qquad (N/mm^2)$$

où :

σ - la valeur recherchée,
C - coefficient réduit sans dimension dépendant des propriétés des matériaux respectifs dont sont constitués le pénétrateur, l'étalon et l'article, et $5 \leq C \leq 20$,

$\overline{g}$ - coefficient sans dimension égal numériquement à l'accélération de la pesanteur,

m - masse du pénétrateur sphérique,

v - vitesse de la collision,

d - diamètre de l'empreinte portée par l'étalon,

$k_1$ - coefficient à déterminer à partir de l'équation

$$k_1 \; = \; v_1 \; / \; v,$$

où v est la vitesse de la collision, $v_1$ est la vitesse à laquelle le pénétrateur sphérique a rebondi de l'étalon,

$k_2$ - coefficient à déterminer à partir de l'équation

$$k_2 \; = \; v_2 \; / \; v,$$

où v est la vitesse de la collision, $v_2$ est la vitesse à laquelle le pénétrateur sphérique a rebondi de l'article,
$\pi$ est le nombre "$\pi$" = 3,1412.

2. Procédé selon la revendication 1, dans lequel la surface de l'article testé exempte de contraintes mécaniques est utilisée comme étalon.

3. Dispositif destiné à exécuter le procédé selon la revendication 1 ou 2, lequel dispositif comprend :

- un boîtier (1),
- un électro-aimant (2) destiné à faire avancer une tige (3) contre un chariot (4), le chariot étant agencé pour comprimer un ressort de lancement (5) et un ressort de rappel (6),
- un verrou (8) relié à un ressort de verrou (11) destiné à maintenir ledit chariot (4) dans la position extrême avec le ressort de lancement (5) et le ressort de rappel (6) comprimés
- une pince de déclenchement (12) destinée à actionner une tige de percussion (7) par l'intermédiaire du ressort de lancement (5) de façon à sortir en utilisation un pénétrateur sphérique (9) au travers de l'orifice d'un collier de poussée (13) dans un canal (24) dudit boîtier (1),
- un ressort laminé en forme de $\Gamma$ (10) destiné à maintenir le pénétrateur sphérique (9) dans sa position de repos et destiné à fermer l'intervalle dans le canal (24) du boîtier (1) en empêchant ainsi un mouvement spontané du pénétrateur sphérique (9), où la tige de percussion (7), lorsqu'elle est actionnée en utilisation, est agencée pour amener le pénétrateur sphérique (9) à surmonter la résistance du ressort laminé en forme de r (10) et à tomber le long dudit canal (24) du boîtier (1),
- des diodes électroluminescentes (14) destinées à orienter des faisceaux de lumière au travers dudit canal (24) du boîtier (1) sur des récepteurs d'émission (15) et étant agencées de sorte que, en utilisation, le pénétrateur sphérique (9) traverse lesdits faisceaux de lumière sur son chemin au travers dudit canal (24),
- un générateur d'impulsions (16) destiné à moduler une émission par les diodes électroluminescentes (14),
- un dispositif logique (17) destiné à déterminer l'ordre dans lequel, en utilisation, le pénétrateur sphérique (9) traverse lesdits faisceaux de lumière sur son trajet au travers du canal (24),
- un calculateur (18) destiné à calculer la vitesse du pénétrateur sphérique (9) et la valeur des coefficients de rebond $k_1$ et $k_2$,
- une unité de calcul (19) destinée à calculer la quantité inconnue $\sigma$ pour les contraintes mécaniques,
- un dispositif d'affichage (20) destiné à afficher les informations déterminées par le dispositif logique (17) et par l'unité de calcul (19),
- un dispositif d'impression (21),
- un support (22) destiné à supporter ledit boîtier (1) et qui est agencé de sorte que, en utilisation, le support (22) soit appuyé sur la surface de test (25) de sorte que l'axe du canal (24) du boîtier (1) soit aligné à un angle de 90° par rapport à la surface de test (25),
- un interverrouillage (23) destiné à empêcher en utilisation l'électro-aimant (2) de devenir actif à moins que le support (22) ne soit appuyé sur une surface de test (25) .

FIG.1

standart (Etalon): $k_1 = T/T_1$

$T$   $T_1$

tested article: $k_2 = T/T_2$

$T$   $T_2$

FIG.2